# EUROPÄISCHE PATENTANMELDUNG

(11) **EP 3 719 973 A1**
(43) Veröffentlichungstag der Anmeldung: **07.10.2020**
(21) Anmeldenummer: 19167306.0
(22) Anmeldetag: 04.04.2019
(51) Int. Cl.: H02K 5/18, H02K 9/06, H02K 9/14, H02K 11/33

(54) **ANTRIEBSEINHEIT MIT EINER LÜFTEREINHEIT**

(71) Anmelder: Siemens Aktiengesellschaft, 80333 München (DE)
(72) Erfinder: Deeg, Christian, 90518 Altdorf (DE); Maidorn, Mischa, 90547 Stein (DE); Tischmacher, Hans, 91207 Lauf (DE)

(57) **Zusammenfassung**

Die Erfindung betrifft einen Antrieb (1) mit - zumindest einer dynamoelektrischen rotatorischen Maschine (2),
- zumindest einem elektronischen Anbauteil (13), das in einer geschlossenen Gehäuseanordnung positioniert ist,
- zumindest einer Kühleinheit (15),
- wobei diese Komponenten axial hintereinander angeordnet sind, indem das elektronische Anbauteil (13) axial zwischen der dynamoelektrischen rotatorischen Maschine (2) und der Kühleinheit (15) angeordnet ist,
- wobei die Gehäuseanordnung einen der Kühleinheit zugewandten Abschnitt aufweist, der sich in Richtung Kühleinheit axial verjüngt, insbesondere kegelförmig ausgeführt ist.

## Beschreibung

Die Erfindung betrifft eine Antriebseinheit mit einer dynamoelektrischen Maschine zumindest einem elektronischen Anbauteil und zumindest einer Kühleinheit.

Derartige Antriebseinheiten sind beispielsweise aus der DE 198 12 729 A1 bekannt. Diese Schrift beschreibt einen Elektromotor, insbesondere mit einem Lüfterrad zur Bildung eines Axial- oder Radiallüfters, mit einer Antriebseinheit und einer ein Steuerungsgehäuse aufweisenden Steuereinheit, wobei die Antriebseinheit einen Stator, einen Läufer und zumindest eine elektrische Spule aufweist und wobei die Steuereinheit eine elektronische Schaltung zur Steuerung oder Regelung der Stromzufuhr zur Spule aufweist. Die Antriebseinheit und die Steuereinheit sind durch Module gebildet und einander zugeordnete Kontaktelemente sind zur gegenseitigen elektrischen Verbindung vorgesehen.

Ebenso ist eine derartige Anordnung aus der DE 38 42 588 A1 bekannt. Die Schrift beschreibt einen kollektorlosen Gleichstrom-Außenläufermotor, der aus einem an einem Motorflansch befestigten Stator mit Statorwicklungen, einem den Stator auf seiner dem Motorflansch abgekehrten Seite umschließenden Außenläufer sowie einer elektronischen, die Statorwicklungen ansteuernden Schaltungsanordnung besteht. Diese Schaltungsanordnung besitzt eine flanschseitig dem Stator zugekehrten angeordnete, elektronischen Bauelemente tragende Leiterplatte sowie mehrere an der Leiterplatte elektrisch angeschlossene, in wärmeleitendem Kontakt mit dem Motorflansch angeordnete Leistungshalbleiter. Die Leistungshalbleiter sind mittelbar über einen ringscheibenförmigen Kühlkörper mit dem Motorflansch wärmeleitend verbunden. Der Kühlkörper bildet mit der Leiterplatte und einem die Leiterplatte halternden Trägerelement eine vormontierte Baugruppe.

Ausgehend davon liegt der Erfindung die Aufgabe zugrunde, eine kompakte Antriebseinheit zu schaffen, die eine ausreichende Kühlung der Antriebseinheit gewährleistet.

Die Lösung der gestellten Aufgabe gelingt durch einen Antrieb mit
- zumindest einer dynamoelektrischen rotatorischen Maschine
- zumindest einem elektronischen Anbauteil, das in einer geschlossenen Gehäuseanordnung positioniert ist,
- zumindest einer Kühleinheit,
- wobei diese Komponenten axial hintereinander angeordnet sind, indem das elektronische Anbauteil axial zwischen der dynamoelektrischen rotatorischen Maschine und der Kühleinheit angeordnet ist,
- wobei die Gehäuseanordnung einen der Kühleinheit zugewandten Abschnitt aufweist, der sich in Richtung Kühleinheit axial verjüngt, insbesondere kegelförmig ausgeführt ist.

Damit ergibt sich ein sehr kompakter und leistungsfähiger Antrieb, dessen Komponenten insbesondere die elektronischen Anbauteile über die Gehäuseanordnung, als auch die dynamoelektrische rotatorische Maschine wie Stator und Rotor kühlt.

Die Gehäuseanordnung, insbesondere der Abschnitt, ist aus vergleichsweise thermisch gut leitfähigem Material, wie beispielsweise Aluminium oder eine Aluminiumlegierung.

Die Gehäuseanordnung ist trichterförmig ausgebildet, wobei der Trichter einen zylindrischen Abschnitt und einen axial verjüngenden Abschnitt aufweist, die einstückig aus gleichem Material, aus mehreren Teilen mit unterschiedlichen Materialien und/oder aus mehreren Teilen mit gleichem Material ausgeführt sein kann.

Die Gehäuseanordnung weist eine Aussparung auf, durch die eine Welle ragt, die u.a. die Antriebswelle der Kühleinheit, insbesondere eines Lüfters ist.

Um die Oberfläche der Gehäuseanordnung zu vergrößern weist der zylindrische Abschnitt und/oder der sich axial verjüngenden Abschnitt an seiner Außenseite axial bzw. quasi-radial erstreckende Rippen auf.

Die Innenseite des zylindrischen Abschnitts und/oder des sich axial verjüngenden Abschnitt ist polygonal ausgeführt, um Steller- oder Umrichterkomponenten direkt an der Innenseite der Gehäuseanordnung anordnen zu können. Damit wird eine vergleichsweise thermisch gute Anbindung gewährleistet.

Die Steller- oder Umrichterkomponenten können insbesondere auch ausschließlich im zylindrischen Abschnitt angeordnet sein, in diesem Fall wirkt der sich axial verjüngenden Abschnitt als Wärmekapazität, die eine wärmepuffernde Wirkung aufweist. Damit können gewisse Überlastbetriebszustände des Antriebs zumindest zeitweise thermisch kompensiert werden.

Dieser Abschnitt ist dann als Vollmaterial ausgeführt, der gleichzeitig für den Lüfter die Funktion einer Deckscheibe erfüllt. Damit können axial kürzere Lüfter eingesetzt werden, um so eine kompaktere, insbesondere axial kürzere Bauweise des Antriebs zu erhalten.

Der Rotor der dynamoelektrischen rotatorischen Maschine wird u.a. über die Welle gekühlt. Außerdem wird Wärme des Rotors auch an den Innenraum der dynamoelektrischen rotatorischen Maschine abgegeben, sodass sich die Lagerschilde, Lager und Gehäuse dadurch ebenfalls erwärmen können. Dieser Wärmeeintrag wird durch die das Gehäuse und die Lagerschilde umströmende Luft, insbesondere durch die Kühleinheit abgeführt.

Der Stator der dynamoelektrischen rotatorischen Maschine erzeugt ebenso Wärme, die u.a. den Innenraum der dynamoelektrischen rotatorischen Maschine aufheizt. Dieser Wärmeeintrag wird ebenfalls durch die das Gehäuse und die Lagerschilde umströmende Luft abgeführt. Des Weiteren ist der Stator vorzugsweise in einen Gehäusemantel eingeschrumpft, um einen vergleichsweise guten Wärmeübergang vom Blechpaket des Stators auf das Gehäuse und die Gehäuserippen zu erhalten.

Die als Eigenlüfter ausgeführte Kühleinheit generiert im Betrieb der dynamoelektrischen rotatorischen Maschine einen Kühlluftstrom, der radial und/oder axial entlang der Oberfläche der Gehäuseanordnung strömt. Dabei trifft der Luftstrom zunächst den sich axial verjüngenden stationären Abschnitt an seiner Außenseite mit seinen quasi-radial erstreckende Rippen. Anschließend wird der Luftstrom an dem zylindrischen Abschnitt geführt. Eine Lüfterhaube, die sich axial Richtung A-Lager erstreckt führt den Luftstrom auch entlang der Kühlrippen der Gehäuseanordnung und Gehäuse der dynamoelektrischen rotatorischen Maschine.

Die Erfindung sowie weitere vorteilhafte Ausgestaltungen der Erfindung werden anhand prinzipieller dargestellter Ausführungsbeispiele näher dargestellt; darin zeigen:
- FIG 1: einen prinzipiellen Längsschnitt eines erfindungsgemäßen Antriebs,

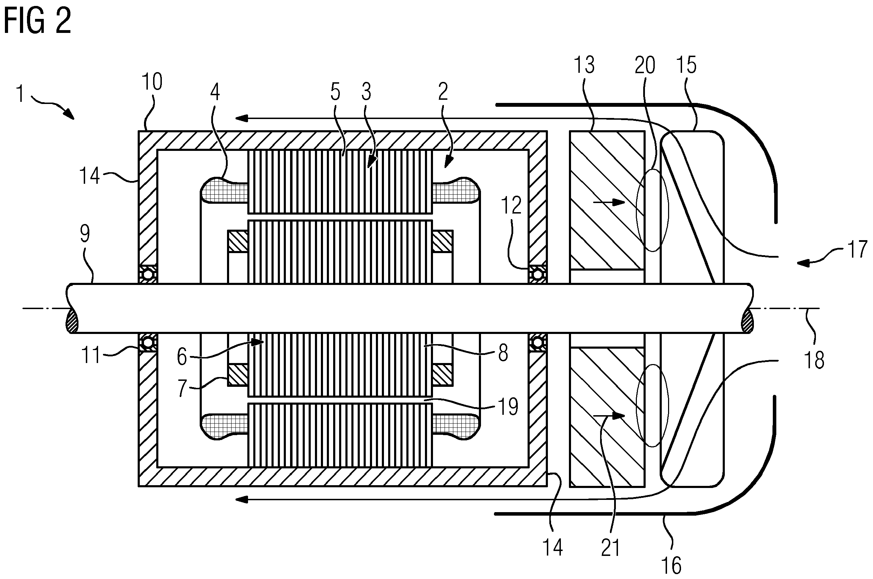

- FIG 2: einen prinzipiellen Längsschnitt eines erfindungsgemäßen Antriebs mit Bereichen wo sich Wärmestau entwickeln kann,
- FIG 3: einen prinzipiellen Längsschnitt eines Antriebs ohne elektrisches Anbauteil,
- FIG 4: Lüfter aus dem Stand der Technik,
- Fig 5, 6: Lüfter,
- FIG 7: einen prinzipiellen Längsschnitt eines erfindungsgemäßen Antriebs mit erfindungsgemäßer Gehäuseanordnung.

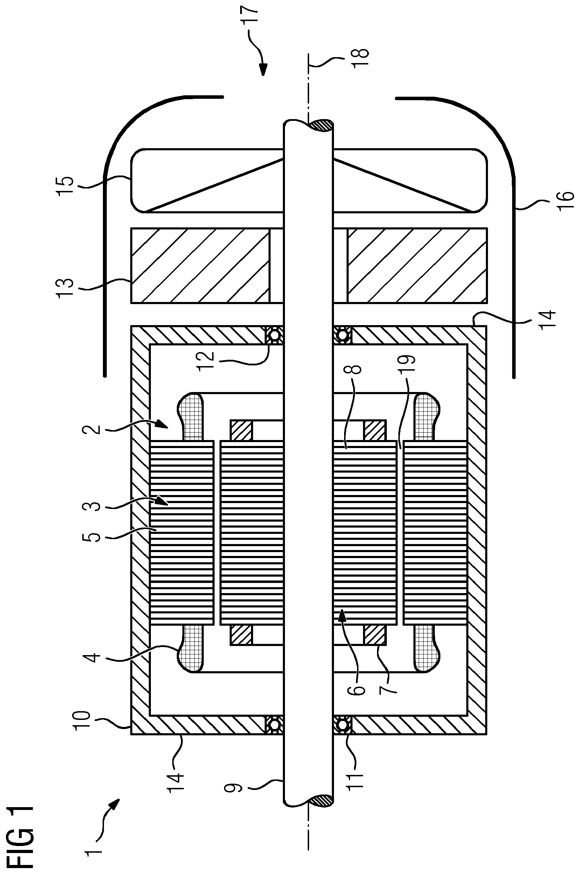

FIG 1 zeigt einen Antrieb 1 mit einer dynamoelektrischen rotatorischen Maschine 2, die einen Stator 3 mit einem Blechpaket 5 aufweist. In dem Blechpaket 5 des Stators 3 ist, einem Luftspalt 19 zugewandt, ein Wicklungssystem angeordnet, das an den Stirnseiten des Blechpakets 5 des Stators 3 Wickelköpfe 4 ausbildet. Drehfest mit einer Welle 9 ist ein Blechpaket 8 eines Rotors 6 verbunden, das in elektromagnetischer Wechselwirkung mit einem bestromten Wicklungssystem des Stators 3 steht und so zu einer Rotation der Welle 9 um eine Achse 18 führt.

Die Welle 9 ist in zwei Lagern drehfest gehalten, einem AS-Lager 11 (der anzutreibenden Arbeitsmaschine zugewandt) und einem BS-Lager 12 (der anzutreibenden Arbeitsmaschine abgewandt). Die dynamoelektrische rotatorische Maschine 2 ist von einem Gehäuse 10 umgeben, das an den Stirnseiten von Lagerschilden 14 begrenzt ist. Axial von der BS-Seite beabstandet befindet sich ein elektronisches Anbauteil 13, das zumindest Komponenten eines Umrichters oder Stellers beinhaltet. Das elektronische Anbauteil 13 ist ortsfest und nicht mit der Welle 9 drehfest verbunden. Axial daran schließt sich ein Lüfter 15 an, der wiederum drehfest mit einer Welle 9 verbunden ist und einen oder mehrere Kühlluftströme generiert, die ggf. durch eine Lüfterhaube 16 geführt werden. Der geförderte Luftstrom wird über eine oder mehrere Ansaugöffnungen 17 in der Lüfterhaube 16 dem Lüfter 15 zugeführt.

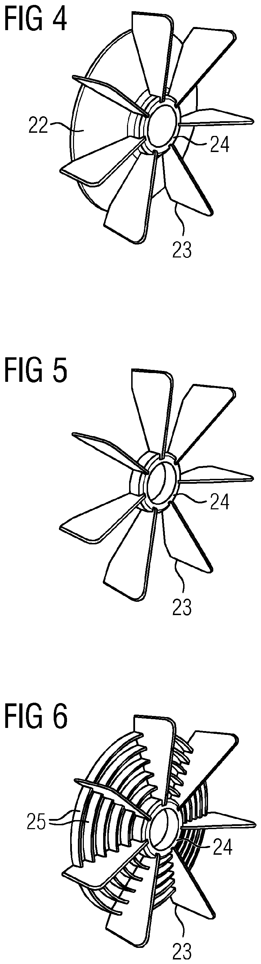

Bei dem Antrieb 1, insbesondere zwischen dem elektronischen Anbauteil 13 und dem zugewandten Lagerschild 14, und/oder zwischen einer Deckscheibe 22 eines Lüfters 15 gemäß FIG 4 und dem elektronischen Anbauteil 13 tritt im Betrieb des Antriebs 1 eine Wärmeansammlung 20 bzw. Wärmestau ein. Der Wärmeeintrag erfolgt dabei auf bzw. in das elektronische Anbauteil 13 von beiden axialen Seiten. So führt Verlustwärme aus dem Umrichter oder Steller, als auch Wärme aus der Maschine 2 über das Lagerschild 14 zu diesem Wärmestau. Die Wärme aus der Maschine 2 setzt sich u.a. aus der Verlustwärme von Stator 3 und Rotor 6 zusammen. Diese heizt zusätzlich die benachbarten Lager auf, was den Schmierstoff der Lager 11, 12 beeinträchtigt, den Schmiereigenschaften schadet und damit zu verkürzten Nachschmierfristen dieser Lager führt.

Die Wärme wird auch über die Welle 9, insbesondere aus dem Rotor 6 der dynamoelektrischen rotatorischen Maschine 2 transportiert und dem Lüfter 15 zugeführt, der als Wärmeabgabeelement fungiert. Der Lüfter 15 erzeugt im Betrieb der dynamoelektrischen rotatorischen Maschine 2 einen Kühlluftstrom 27.

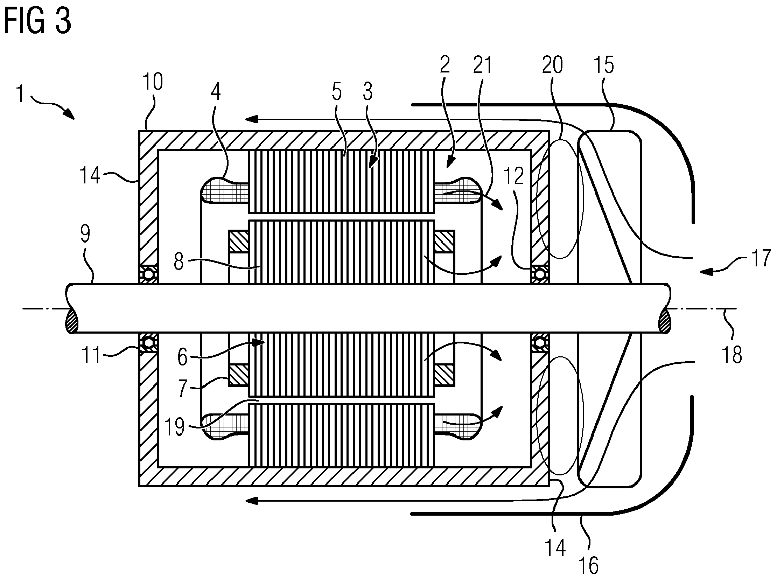

FIG 3 zeigt die Problematik des Wärmestaus auch bei einem Antrieb ohne elektronisches Anbauteil 13. Dabei tritt der Wärmestau zwischen der Deckscheibe 22 eines Lüfters 15 gemäß FIG 4 und dem Lagerschild 14 ein.

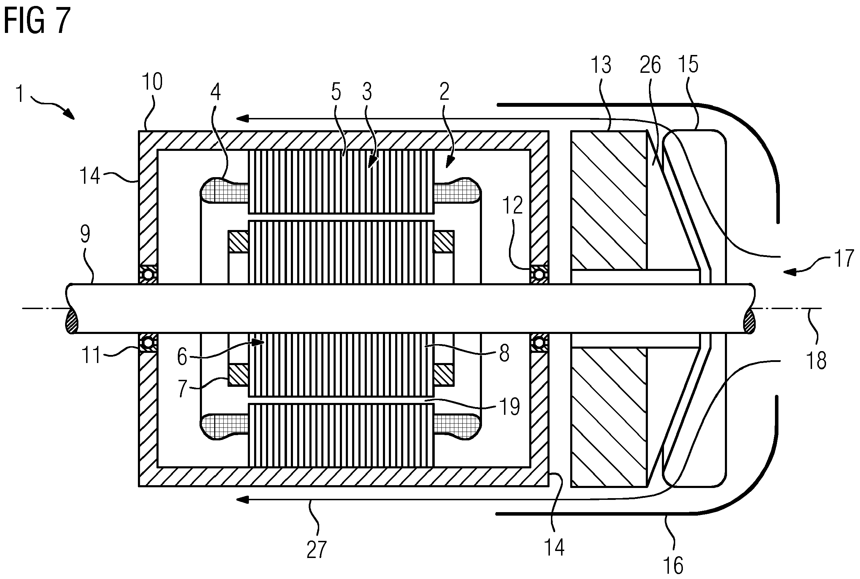

Gemäß FIG 7 wird nunmehr erfindungsgemäß die Deckscheibe 22 eines Lüfters 15 durch ein konisches und stationäres Bauteil 26 ersetzt, das nunmehr Teil der Gehäuseanordnung des elektronischen Anbauteils 13 ausgeführt ist. Damit ergeben sich axial kürzere Lüfter 15 gemäß FIG 5, 6 deren erzeugter Luftstrom entlang dem konischen Bauteil 26 geführt wird. Durch oberflächenvergrößernde Maßnahmen, wie Noppen oder Rippen kann die Wärmeabgabe aus dem elektronischen Anbauteil 13 an den Kühlluftstrom 27 verbessert werden. Durch oberflächenvergrößernde Maßnahmen, wie Noppen oder Rippen kann die Wärmeabgabe aus dem konischen Bauteil 26 ebenfalls verbessert werden.

Das konische Bauteil 26 wirkt außerdem als Wärmekapazität und bildet so für sich wechselnde Belastungen des Antriebs 1 einen Wärmepuffer.

Das konische Bauteil 26 ist aus thermisch gut leifähigem material so dass die Verlustwärme der Steller- und/oder Umrichterkomponenten aus dem elektronischen Anbauteil 13 an den Kühlluftstrom 27 abgebbar ist.

Die Gehäuseanordnung ist trichterförmig ausgebildet, wobei der Trichter einen zylindrischen Abschnitt und einen sich axial verjüngenden Abschnitt, das konische Bauteil 26 aufweist. Die Gehäuseanordnung ist einstückig aus gleichem Material, aus mehreren Teilen mit unterschiedlichen Materialien und/oder aus mehreren Teilen mit gleichem Material ausgeführt.

Die Gehäuseanordnung weist in Wellennähe eine Aussparung auf, durch die die Welle 9 ragt, die u.a. die Antriebswelle des Lüfters 15 ist.

Um die Oberfläche der Gehäuseanordnung des elektronischen Bauteils 13 zu vergrößern weist der zylindrische Abschnitt und/oder der sich axial verjüngenden Abschnitt, also das konische Bauteil 26 an seiner Außenseite axial bzw. quasi-radial erstreckende Rippen auf.

Die Innenseite des zylindrischen Abschnitts und/oder des sich axial verjüngenden Abschnitt ist polygonal ausgeführt, um Steller- und/oder Umrichterkomponenten des elektronischen Anbauteils 13 direkt an der Innenseite der Gehäuseanordnung anordnen zu können. Damit wird eine vergleichsweise thermisch gute Anbindung der Steller- und/der Umrichterkomponenten gewährleistet.

Die Steller- oder Umrichterkomponenten können insbesondere auch ausschließlich im zylindrischen Abschnitt angeordnet sein, in diesem Fall wirkt das konische Bauteil 26 als Wärmekapazität, das eine thermisch puffernde Wirkung aufweist, insbesondere wenn es als Vollmaterial ausgeführt ist.

Das konische Bauteil 26, unabhängig davon, ob als hohles Bauteil oder aus Vollmaterial, beinhaltet für den Lüfter 15 die Funktion einer Deckscheibe 22 und/oder einer Leitvorrichtung des Kühlluftstroms 27. Damit können axial kürzere Lüfter 15 eingesetzt werden, um so eine kompaktere Bauweise des Antriebs 1 zu erhalten.

Der Lüfter 15 nach FIG 5 weist radial angeordnete Flügel auf, die außer über die 24 Nabe keine mechanischen Verbindungen zueinander aufweisen.

Der Lüfter 15 nach FIG 6 weist radial angeordnete Flügel auf, die durch einen oder mehrere umfänglich verlaufende Ringe 25 miteinander mechanisch verbunden sind, und dennoch eine axiale Durchgängigkeit eines Luftstroms gestatten.

Der Antrieb 1 bzw. die Antriebseinheit ist grundsätzlich kompakt aufgebaut. Dabei können die vorab beschriebenen und die folgenden Merkmale einzeln oder in beliebiger Kombination zur Gestaltung des Antriebs 1 angezogen und zusammengestellt werden. Dabei soll der kompakte Antrieb 1 u.a. bestmöglich gekühlt werden.

Dazu wird an die dynamoelektrische rotatorische Maschine 2 axial zumindest ein elektronisches Anbauteil 13 oder Komponenten davon, wie ein oder mehrere Leistungshalbleiter, Drosseln, Kondensatoren und Regelungsbausteine, vorgesehen. Diese Komponenten des elektronischen Anbauteils 13 sind in einer geschlossenen Gehäuseanordnung angeordnet. Eine Kühlung des Antriebs 1 und seiner jeweiligen Abschnitte/Teile erfolgt durch eine oder mehrere Kühleinheiten, die als Flüssigkeitskühlung (Kühlmantel an Gehäuseanordnung und/oder am Gehäuse 10 der dynamoelektrische rotatorische Maschine 2) realisiert werden kann. Vorzugsweise wird eine Luftkühlung vorgesehen, deren Lüfter 15 an der der dynamoelektrischen rotatorischen Maschine 2 abgewandten Seite der Gehäuseanordnung liegt, so dass eine axiale Reihenfolge von Lüfter 15, Gehäuseanordnung und dynamoelektrischer rotatorischer Maschine 2 vorliegt.

Der Lüfter 15 kann auch als eine Lüftereinheit aus einem oder mehreren Eigen- oder auch Fremdlüftern aufgebaut sein, die auch zumindest teilweise an oder in der Lüfterhaube 16 integriert sein können.

Zur Verbesserung des Kühleffekts sind oberflächenvergrößernde Maßnahmen an der Gehäuseanordnung und/oder dem Gehäuse 10 der dynamoelektrischen rotatorischen Maschine 2 vorgesehen. Dabei sind dort Rippen, Noppen oder zusätzliche Wärmekapazitäten in Form von Gehäuseerweiterung vorgesehen, die auch zusätzliche Wärmelasten bei dementsprechendem Betrieb des Antriebs 1 puffern können.

Außerdem wird durch spezielle Gestaltung bzw. Aussparungen zwischen dynamoelektrischer rotatorischer Maschine 2, insbesondere deren Lagerschild 14 und der Gehäuseanordnung Kühlkanäle geschaffen, die durch dementsprechende Gestaltung und durch den Kühlluftstrom 27 einen zur Kühlung betragenden Venturieffekt in diesen Kühlkanälen erzielen.

Die Gehäuseanordnung kann dabei auch trichterförmig ausgebildet sein, wobei der Trichter einen zylindrischen Abschnitt und einen axial verjüngenden Abschnitt, das konische Bauteil 26 aufweist, die einstückig aus gleichem Material, aus mehreren Teilen mit unterschiedlichen Materialien und/oder aus mehreren Teilen mit gleichem Material ausgeführt sein kann.

Um die Oberfläche der Gehäuseanordnung zu vergrößern weist der zylindrische Abschnitt und/oder der sich axial verjüngenden Abschnitt, also das konische Bauteil 26 an seiner Außenseite axial bzw. quasi-radial erstreckende Rippen auf.

Die Innenseite des zylindrischen Abschnitts und/oder des sich axial verjüngenden Abschnitt ist polygonal ausgeführt, um Steller- oder Umrichterkomponenten direkt an der Innenseite der Gehäuseanordnung anordnen zu können. Damit wird eine vergleichsweise thermisch gute Anbindung an die Hülle der Gehäuseanordnung gewährleistet.

Die Steller- und/oder Umrichterkomponenten können insbesondere auch ausschließlich im zylindrischen Abschnitt angeordnet sein, in diesem Fall wirkt der sich axial verjüngenden Abschnitt 26 als Wärmekapazität, der eine thermisch puffernde Wirkung aufweist. Dieser Abschnitt 26 ist dann als Vollmaterial ausgeführt, der gleichzeitig für den Lüfter 15 die Funktion einer Deckscheibe 22 erfüllt. Damit können axial kürzere Lüfter 15 eingesetzt werden, um so eine kompaktere Bauweise des Antriebs 1 zu erhalten.

Ebenso sind optional auch einzelne Komponenten der Umrichter, z.B. Drosseln am Außenumfang des Antriebs 1 anordenbar.

Durch an und/oder in der dynamoelektrische rotatorische Maschine 2, an und/oder in der Gehäuseanordnung, an und/oder in den Lagern bzw. Lagerschilden angeordnete Sensoren, beispielsweise Thermosensoren, kann der Antrieb 1 beispielsweise über Taktung der Halbleiterbauelemente der Umrichter, Drehzahlsteuerung der dynamoelektrische rotatorische Maschine 2 oder Drehzahlsteuerung eines Fremdlüfters etc. die Temperaturentwicklung innerhalb des Antriebs 1 beeinflussen.

Elektrische Anschlussleitungen, ebenso wie Sensorleitungen können über das Lagerschild 14, als auch über einen Klemmkasten in die Maschine 2 geführt sein.

Des Weiteren ist es möglich innerhalb der Gehäuseanordnung des elektronischen Anbauteils 13 einen Innenkühlkreislauf mittels eines kleinen ggf. steuerbaren Lüfters innerhalb der geschlossenen Gehäuseanordnung zu generieren.

Ebenso ist es möglich im elektronischen Anbauteil 13 eine oder mehrere Innenlüfter vorzusehen, die innerhalb des geschlossenen elektronischen Anbauteils 13 zu einem Innenkühlkreislauf führen. Der Innenlüfter ist dabei entweder separat als Fremdlüfter temperaturabhängig ansteuerbar, oder magnetisch mit der Welle 9 gekoppelt, so dass eine Art Eigenbelüftung des elektronischen Anbauteils 13 vorliegt, sobald sich die Welle 9 dreht.

Der Antrieb des Innenlüfters erfolgt über eine magnetische Kopplung von auf der Welle 9 positionierten Magneten und dementsprechend angeordneten Magneten innerhalb des elektronischen Anbauteils 13 beispielsweise auf einer Nabe des Innenlüfters.

Alternativ kann der Innenlüfter seine Antriebsenergie auch dem Drehfeld der dynamoelektrischen rotatorischen Maschine 2, insbesondere dessen Oberschwingungen entnehmen.

Die elektrische Antriebsenergie des Innenlüfter kann auch direkt den Steller- oder Umrichterkomponenten innerhalb des elektronischen Anbauteils 13 entnommen werden.

Die Innenlüfter sind dabei bei jeder Ausführungsform innerhalb des stationären Anbauteils 13 drehbar gelagert.

Die Isttemperatur wird dabei jeweils über ein Temperaturmodell und/oder einen oder mehrere Temperatursensoren in der dynamoelektrischen rotatorischen Maschine 2 und/oder dem elektronischen Anbauteil 13 ermittelt.

Durch den Lüfter 15 und den Innenlüfter kann auch zumindest zeitweise auch ein Redundanzbetrieb des Antriebs 1 aufrechterhalten werden, sofern einer der beiden Lüfter ausfallen sollte.

Zur Regelung kann der Antrieb 1 auch eine Regeleinheit aufweisen, die Daten unterschiedlichster Sensoren u.a. Temperatursensoren, Schwingungssensoren, Schallsensoren erhält. Die Temperatursensoren sind bei diesem Antrieb 1 an den relevanten Einbauorten angeordnet. So sind Temperatursensoren für die Außenluft, für das elektronische Anbauteil 13, der Leistungshalbleiter im elektronischen Anbauteil 13, für das oder die Lager 11, 12, für das Wicklungssystem und/oder den Wickelkopf 4, für den Innenraum der Maschine 2, als auch für das Gehäuse 10 und die Umgebung vorgesehen.

Sensoren, die in dem Antrieb 1, also der Maschine 2 und/oder dem elektronischen. Anbauteil 13 vorgesehen werden, sind kabelgebunden oder kabellos mit einer Regeleinheit verbunden, die in der elektronischen Anbaueinheit 13 oder am Gehäuse 10 der Maschine 2, insbesondere in einem Klemmenkasten oder in der Maschine 2 angeordnet ist.

Schwingungssensoren sind an der Welle 9 und oder Gehäuse 10 angebracht. Schallsensoren sind vor allem an schallemittierenden Quellen, wie z.B. Rippen oder Lagerschilden 14 vorgesehen. Des Weiteren sind Drehzahlsensoren zur Regelung des Antriebs 1 vorhanden.

Aus all diesen Daten regelt bzw. steuert die Regeleinheit u.a. die Drehzahl des oder der Fremdlüfters und/oder die Taktfrequenz des Umrichters. D.h. bei besonders hohen Außentemperaturen und/oder geringer Drehzahl der Welle 9 wird der Fremdlüfter temperaturabhängig zugeschaltet. Dabei ist auch die Drehzahl und damit der Volumenstrom des Fremdlüfters 26 steuer- bzw. regelbar.

Die Isttemperatur vorzugsweise des gesamtem Antriebs 1 wird dabei über einen oder mehrere der oben aufgeführten Temperatursensoren erfasst. Zusätzlich ist es möglich über ein Temperaturmodell die erfassten Werte zu verifizieren bzw. über vorgegebene in der Regeleinheit und/oder einer Cloud (beispielsweise über einen digitalen Zwilling) hinterlegte Algorithmen Temperaturen der Antriebskomponenten zu ermitteln, die nicht mit Sensoren versehen sind.

Damit ist ein energieeffizienter Betrieb des Antriebs 1 durchzuführbar und Wartungsintervalle des Antriebs 1 und dessen Komponenten sind außerdem besser planbar, wie z.B. Nachschmierfristen der Lager.

Die Sensoren sind dabei Schwingungssensoren, Temperatursensoren, Feuchtigkeitssensoren etc. Vorteilhafterweise übermitteln die Sensoren, ihre Daten leitungsgebunden oder über drahtlose Verbindungen an die Regeleinheit. Die Daten werden entweder durch direkten Kontakt oder optisch (beispielsweise Infrarot-Temperaturmessung) erfasst.

Die Regeleinheiten unterschiedlicher Antriebe 1 können auch über eine Cloud in Kontakt stehen und dabei vorgebbare Daten ihrer Antriebe austauschen.

Damit ergibt sich ein sehr kompakter und leistungsfähiger Antrieb 1, der aufgrund der Regeleinheit einen thermisch und/oder energieeffizienten Betrieb des Antriebs 1 gewährleistet. Dabei greift die Regeleinheit in die Taktfrequenz, den Aussteuergrad und/oder den Steuerwinkel eines Umrichters des elektronischen Anbauteils ein, ebenso wie beispielsweise in die Drehzahl eines Fremdlüfters. Damit ergibt sich im Hinblick auf thermische grenzen und/oder Energieeffizienz des Antriebs 1 eine optimale und aussteuerbare Verlustaufteilung zwischen den Komponenten der dynamoelektrischen Maschine 2 und den elektronischen Anbauteilen 13. Mittels der Kühleinheiten, zumindest einer Basiskühleinheit, einer Eigenbelüftung 15 und/oder einer Boosterkühleinheit, die insbesondere die Komponenten der dynamoelektrischen rotatorischen Maschine 2, wie Stator und Rotor, als auch die elektronischen Anbauteile 13, wie Leistungs- und Steuerelektronik, Regeleinheit etc. kühlt, wird somit auch ein thermisch steuer- bzw. regelbarer optimaler Betrieb des Antriebs 1 gewährleistet.

Beispielsweise führen bestimmte Einstellungen der Taktfrequenz des Umrichters zu geringeren Verlusten im Umrichter, aber erhöhen die Verluste in der dynamoelektrischen Maschine 2. Umgekehrt können thermisch günstige Einstellungen für die dynamoelektrische Maschine 2 den Umrichter thermisch stärker belasten. Je nachdem welches dieser Teilsysteme des Antriebs 1 noch thermische Reserven aufweist, kann über die Regeleinheit 27 der Umrichter dementsprechend eingestellt werden. Zusätzlich kann die Regeleinheit 27 auch in die Kühlung eingreifen, indem beispielsweise ein oder mehrere Fremdlüfter des Antriebs 1 zu- oder abgeschaltet werden oder mit dementsprechender Drehzahl betrieben werden.

## Patentansprüche

1. Antrieb (1) mit
- zumindest einer dynamoelektrischen rotatorischen Maschine (2),
- zumindest einem elektronischen Anbauteil (13), das in einer geschlossenen Gehäuseanordnung positioniert ist,
- zumindest einer Kühleinheit (15),
- wobei diese Komponenten axial hintereinander angeordnet sind, indem das elektronische Anbauteil (13) axial zwischen der dynamoelektrischen rotatorischen Maschine (2) und der Kühleinheit (15) angeordnet ist,
- wobei die Gehäuseanordnung einen der Kühleinheit zugewandten Abschnitt aufweist, der sich in Richtung Kühleinheit axial verjüngt, insbesondere kegelförmig ausgeführt ist.

2. Antrieb (1) nach Anspruch 1, **dadurch gekennzeichnet, dass** die Gehäuseanordnung zumindest abschnittsweise thermisch leitfähig ist.

3. Antrieb (1) nach einem der vorhergehenden Ansprüche, **dadurch gekennzeichnet, dass** zumindest der sich axial verjüngende Abschnitt (26) der Gehäuseanordnung an seiner Oberfläche eine oberflächenvergrößernde Struktur, insbesondere radial ersteckende Rippen aufweist.

4. Antrieb (1) nach einem der vorhergehenden Ansprüche, **dadurch gekennzeichnet, dass** die Kühleinheit (15) einen Lüfter mit radial angeordneten Flügeln aufweist, die außer der Nabe (24) keine mechanischen Verbindungen zueinander aufweisen.

5. Antrieb (1) nach einem der vorhergehenden Ansprüche 1 bis 3, **dadurch gekennzeichnet, dass** die Kühleinheit (15) einen Lüfter mit radial angeordneten Flügeln aufweist, die durch einen oder mehrere umfänglich verlaufende Ringe (25) mechanisch miteinander verbunden sind, die eine axiale Durchgängigkeit eines Luftstroms gestatten.

6. Antrieb (1) nach einem der vorhergehenden Ansprüche, **dadurch gekennzeichnet, dass** die dynamoelektrische rotatorische Maschine (2) von einem Gehäuse (10) umgeben ist, das zumindest am Außenumfang abschnittsweise Rippen aufweist.

7. Antrieb (1) nach einem der vorhergehenden Ansprüche, **dadurch gekennzeichnet, dass** das elektronische Anbauteil (13) Komponenten aufweist, die als Steller und/oder Umrichter ausgeführt sind,
